# EUROPÄISCHE PATENTSCHRIFT

(11) **EP 3 396 286 B1**
(45) Veröffentlichungstag und Bekanntmachung des Hinweises auf die Patenterteilung: **22.04.2020**
(21) Anmeldenummer: 18168864.9
(22) Anmeldetag: 24.04.2018
(51) Int. Cl.: F26B 17/04, F26B 23/00, F26B 3/04, F26B 21/04

(54) **DURCHLAUFTROCKNER MIT EINER ERSTEN UND EINER ZWEITEN SEKTION**
CONTINUOUS FLOW DRIER COMPRISING A FIRST AND A SECOND SECTION
SÉCHOIR CONTINU POURVU D'UNE PREMIÈRE ET D'UNE SECONDE SECTION

(30) Priorität: 24.04.2017 DE 102017108695
(43) Veröffentlichungstag der Anmeldung: 31.10.2018
(73) Patentinhaber: Stela Laxhuber GmbH, 84323 Massing (DE)
(72) Erfinder: Laxhuber, Thomas Christian, 84323 Massing (DE); Latein, Tobias, 84567 Erlbach (DE)
(74) Vertreter: Rothkopf, Ferdinand

(56) Entgegenhaltungen:
- WO-A1-2015/127490
- WO-A1-2017/133727
- DE-A1- 2 941 037
- DE-A1-102014 200 751
- DE-B3- 10 253 558
- DE-C- 506 267

## Beschreibung

### Hintergrund der Erfindung

Die Erfindung betrifft einen Durchlauftrockner zum Trocknen eines Gutes mittels Warmluft mit einer ersten und einer zweiten Sektion, die vom Gut in einer Transportrichtung nacheinander durchlaufen werden, mit einer Frischluftzuführeinrichtung zum Zuführen von Frischluft als Zuluft, mit einer Abluftrückführeinrichtung zum Abführen von Abluft und Rückführen als Zuluft und mit einem Wärmeübertrager, durch den hindurch zum einen die Frischluft und zum anderen die Abluft geführt sind, zum Übertragen von Abwärme der Abluft in die Frischluft.

Durchlauftrockner sind Trockner, bei denen zu trocknendes Gut kontinuierlich oder chargenweise durch den Trockner transportiert wird. Ein solcher Trockner ist insbesondere ein Bandtrockner, der mittels eines Bandes das zu trocknende Gut durch den Durchlauftrockner fördert. Das zu trocknende Gut, zum Beispiel Klärschlamm, Holzspäne, Hackschnitzel, RDF (refuse-derived fuel), SSW (solid shredded waste), MSW (municipal solid waste), Hausabfälle, Gras oder landwirtschaftliche Produkte und Nebenprodukte, wie Zuckerrübenschnitzel, ist dabei zunächst feucht bzw. nass. Das Gut wird getrocknet, indem ihm Feuchtigkeit mittels Warmluft entzogen wird. Die Warmluft wird extra erzeugt, indem insbesondere Luft aus der Umgebung des Durchlauftrockners erwärmt wird. Beim Erwärmen der Luft sinkt die relative Luftfeuchte dieser Luft, die Luft wird "trockener". Diese Warmluft mit niedriger relativer Luftfeuchte durchströmt dann im Durchlauftrockner das zu trocknende Gut und umströmt dessen Bestandteile.

Zum Erwärmen der Luft zu Warmluft wird selbstverständlich Energie benötigt. Diese Energie ist verloren, wenn die erzeugte Warmluft nach dem Trocknen des Gutes in die Umgebung entlassen wird. Es sind daher erste Ansätze bekannt, um die Warmluft im Kreislauf zu führen.

Das zu trocknende Gut wird zugleich in einer Transportrichtung durch den Durchlauftrockner gefördert und durchläuft dabei mindestens zwei Sektionen. Die einzelne Sektion unterteilt den Durchlauftrockner räumlich. Die Sektionen können dazu voneinander luftströmungsmäßig weitgehend getrennt sein. Es sind so in den Sektionen unterschiedliche Luftströme möglich, die je unterschiedliche relative Luftfeuchten und unterschiedliche Temperaturen aufweisen können.

Zum Zuführen von Luft zum Durchlauftrockner ist eine Frischluftzuführeinrichtung vorgesehen, die aus der Umgebung entnommene, in der Regel trockene Frischluft dem Durchlauftrockner als Zuluft zuführt.

Bei solchen Durchlauftrocknern ist es ferner bekannt eine Abluftrückführeinrichtung vorzusehen, mittels der Abluft aus dem Trocknungsvorgang abgezogen und dann zumindest teilweise in den Durchlauftrockner zurückgeführt wird. Ein Teil der Abluft wird dabei durch einen Wärmeübertrager geleitet, durch den auch zugeführte Frischluft geführt wird. So kann thermische Energie bzw. Abwärme von der Abluft an die Zuluft übergeführt werden.

Aus WO 2015 127 490 A1 ist ein Durchlauftrockner bekannt, bei dem ein zu trocknendes Schüttgut nacheinander durch zumindest eine Vortrocknungskammer und zumindest eine Nachtrocknungskammer geführt ist. Dabei umfasst ein Luftstrom in einer Nachtrocknungskammer einen im Kreislauf geführten Umluftstrom, aus der ein Teilluftstrom abgezweigt und durch einen Wärmetauscher hindurchgeführt ist. Nach dem Hindurchführen durch den Wärmetauscher wird der Teilluftstrom zur Gänze wieder in den Umluftstrom zurückgeführt. Ein Luftstrom durch die mindestens eine Vortrocknungskammer ist aus einer durch den Wärmetauscher angesaugten Frischluft gebildet. Dabei ist die Frischluft mittels einer Ventilationsvorrichtung angesaugt und durch die Vortrocknungskammer geleitet.

Aus DE 506 267 C1 ist ein Kanalstufentrockner bekannt, durch den ein Trockengut mittels eines endlosen Bandes durch mehrere Stufen in Richtung einer letzten Stufe gefördert ist. Nach der letzten Stufe ist das Trockengut aus dem Trockner abgeführt. Dabei ist der letzten Stufe Außenluft zugeführt, die mittels einer Abwärme aus der vorhergehenden Stufe beheizt ist. Die zugeführte Außenluft ist durch eine Leitung und das frische Trockengut am Einlass, das Trockengut vorwärmend, ins Freie geführt.

### Zugrundeliegende Aufgabe

Der Erfindung liegt die Aufgabe zugrunde, einen Durchlauftrockner zum Trocknen eines Gutes mittels Warmluft zu schaffen, der im Vergleich zu bekannten Durchlauftrocknern eine weitergehende Energieeinsparung möglich macht.

### Erfindungsgemäße Lösung

Diese Aufgabe ist erfindungsgemäß mit einem Durchlauftrockner zum Trocknen eines Gutes mittels Warmluft nach Anspruch 1 gelöst, der mit einer ersten und einer zweiten Sektion versehen ist, die vom Gut in einer Transportrichtung nacheinander durchlaufen werden, der mit einer Frischluftzuführeinrichtung zum Zuführen von Frischluft als Zuluft versehen ist, der mit einer Abluftrückführeinrichtung zum Abführen von Abluft und Rückführen als Zuluft versehen ist und der mit einem Wärmeübertrager versehen ist, durch den hindurch zum einen Frischluft und zum anderen Abluft geführt sind, zum Übertragen von Abwärme der Abluft in die Frischluft. Gemäß der Erfindung ist mit der Abluftrückführeinrichtung ein erster Teil der Abluft aus der ersten Sektion abzuführen und als Zuluft direkt in die erste Sektion rückzuführen. Mit der Abluftrückführeinrichtung ist ferner ein zweiter Teil der Abluft aus der ersten Sektion abzuführen, durch den Wärmeübertrager zu führen und als Zuluft in die erste Sektion rückzuführen. Mittels der Frischluftzuführeinrichtung ist die Frischluft als Zuluft in die zweite Sektion zuzuführen.

Die Erfindung ist ferner auch auf ein Verfahren zum Betreiben eines Durchlauftrockners zum Trocknen eines Gutes mittels Warmluft nach Anspruch 9 gerichtet, bei dem eine erste und eine zweite Sektion vom Gut in einer Transportrichtung nacheinander durchlaufen wird, Frischluft als Zuluft zugeführt wird, Abluft abgeführt und als Zuluft rückgeführt wird und mittels eines Wärmeübertragers Abwärme der Abluft in die Frischluft übertragen wird. Gemäß der Erfindung wird ein erster Teil der Abluft aus der ersten Sektion abgeführt und als Zuluft direkt in die erste Sektion rückgeführt, ein zweiter Teil der Abluft aus der ersten Sektion abgeführt, durch den Wärmeübertrager geführt und als Zuluft in die erste Sektion rückgeführt, und die Frischluft als Zuluft in die zweite Sektion zugeführt.

Bei dem erfindungsgemäßen Durchlauftrockner ist eine Abluftrückführeinrichtung vorgesehen, mittels der Abluft von einem Trocknungsvorgang aus der ersten Sektion des Durchlauftrockners abgezogen wird. Diese Abluft wird teilweise in die erste Sektion des Durchlauftrockners direkt zurückgeführt. Ein zweiter Teil der Abluft aus der ersten Sektion des Durchlauftrockners wird erfindungsgemäß zu einem Wärmeübertrager geführt, an dem thermische Energie bzw. Abwärme von der Abluft an ebenfalls durch den Wärmeübertrager strömende Zuluft übergeführt wird. Die beiden Ströme von Abluft und Zuluft sind dabei insbesondere an dem Wärmeübertrager mittels einer Trennfläche voneinander getrennt. An der Trennfläche strömt dann auf der einen Seite die Abluft und auf der anderen Seite die Zuluft entlang. Durch die Trennfläche hindurch wird Wärmeenergie der Abluft an die Zuluft abgegeben. Die Abwärme der Abluft erwärmt so die dem Durchlauftrockner zugeführte Luft, die insbesondere Frischluft ist. Somit wird Wärmeenergie aus der Abluft zurückgewonnen. Zugleich sind die Luftströme von Abluft und Zuluft feuchtetechnisch voneinander getrennt. Die in der Abluft enthaltene Feuchte kann also nicht in die Zuluft übertreten.

Bei dem erfindungsgemäßen Durchlauftrockner ist ferner eine Frischluftzuführeinrichtung vorgesehen, die aus der Umgebung entnommene, in der Regel trockene Frischluft dem Durchlauftrockner als Zuluft zuführt. Diese frisch zugeführte Zuluft wird gemäß der Erfindung einer zweiten Sektion des Durchlauftrockners zugeführt, die sich in Strömungsrichtung des Gutes hinter der ersten Sektion befindet. Die Zuluft wird dabei durch den oben genannten Wärmeübertrager geführt.

Mit der erfindungsgemäßen Lösung wird Abluft aus einem ersten Teil des Gutstromes verwendet, um Zuluft vorzuwärmen. Die Abluft wird damit aus einem Teil bzw. einer Sektion des Durchlauftrockners entnommen, in dem das Gut noch vergleichsweise feucht ist. Aufgrund des hohen Feuchtigkeitsgehalts des Gutes ist die dortige Abluft ebenfalls hochgradig mit Feuchtigkeit aufgesättigt. Insbesondere ist die Abluft in diesem Teil bzw. dieser Sektion des Durchlauftrockners in ihrem gesamten Umfang vollständig aufgesättigt. Sie weist durchgängig einen Feuchtegehalt von 100% auf, wenn sie aus der ersten Sektion mittels der Abluftrückführeinrichtung entnommen wird. Gemäß der Erfindung wird ein Teil dieser Abluft durch einen Wärmetauscher geführt und damit Zuluft erwärmt. Bei dem derartigen Übertragen von Abwärme der Abluft kann aufgrund der dann vorherrschenden thermodynamischen Gegebenheiten ein besonders hoher Anteil an Energie von der Abluft auf die Zuluft übertragen werden. Ferner wird besonders vorteilhaft Zuluft vorgewärmt, die nachfolgend für den hinteren Teil bzw. die zweite Sektion des Durchlauftrockners vorgesehen ist. Diese Zuluft muss dafür eine vergleichsweise hohe Temperatur aufweisen, um das Gut wunschgemäß weitgehend vollständig trocknen zu können. Um diese hohe Temperatur insgesamt zu erreichen, ist ein hoher Energieeintrag in die Zuluft beim Vorwärmen entsprechend sehr vorteilhaft. Ferner gibt es wegen der dabei anzustrebenden, hohen Temperaturen hinsichtlich der zu erreichenden Vorwärmung keine Obergrenze. Es kann also aus der Abluft die maximale Menge an Energie übertragen werden.

Die erfindungsgemäße Lösung ermöglicht es, dass das Gut zuletzt, also in der zweiten Sektion, mit zugeführter Frischluft zu trocknen ist. Dies ist besonders von Vorteil, wenn das Gut zur Reduzierung von Staubeintrag zuletzt mit besonders reiner Luft getrocknet werden soll.

Vorteilhaft ist der erfindungsgemäße Wärmeübertrager derart dimensioniert, dass an ihm Feuchtigkeit aus der Abluft auskondensiert. Feuchtigkeit kondensiert aus, wenn die relative Luftfeuchtigkeit der jeweils relevanten Luft 100% (in Worten: einhundert Prozent) erreicht ist. Die relative Luftfeuchtigkeit in Luft nimmt zu, wenn die Luft, wie in diesem Fall die warme Abluft, abkühlt. Das erfindungsgemäß angestrebte Auskondensieren wird vorzugsweise erzielt, indem die Feuchtigkeit an einer Trennfläche des Wärmeübertragers auskondensiert. Dazu gibt die Abluft so viel thermische Energie an der Trennfläche ab, dass die relative Luftfeuchtigkeit in der Abluft 100% erreicht. Der erfindungsgemäße erste Wärmeübertrager hat so vorteilhaft drei Funktionen. Die erste Funktion ist das Entfeuchten der Abluft, die durch den ersten Wärmeübertrager strömt. Die zweite Funktion ist das Aufheizen der zugeführten Frischluft. Die dritte Funktion ist das Verringern der relativer Luftfeuchte der zugeführten Frischluft, bedingt durch das Aufheizen dieser Frischluft.

Erfindungsgemäß bevorzugt ist ferner ein erster Heizer vorgesehen, mittels dessen die Zuluft vor deren Rückführen in die erste Sektion aufzuheizen ist. Der Heizer ist zum Beispiel ein Warmwasser-Wärmetauscher, ein Dampf-Wärmetauscher, eine Elektroheizeinrichtung oder ein Heizbrenner, mittels dessen durch Energiezufuhr die durch ihn hindurch geführte Luft erwärmt wird. Beim Erwärmen der Luft mit dem Heizer sinkt, wie bereits oben erwähnt, die relative Luftfeuchtigkeit dieser Zuluft. Eine niedrige Luftfeuchtigkeit ist beim Trocknen von Vorteil, da die derartige Zuluft dann wieder mehr Wasser aufnehmen kann. Wärmere Zuluft kann also mehr Wasser aufnehmen als kältere Zuluft. Die Zuluft wird erfindungsgemäß der ersten Sektion zunächst entzogen und dann in diese erste Sektion wieder zugeführt. In dieser ersten Sektion ist die Feuchtigkeit des zu trocknenden Gutes bezogen auf dessen Förderrichtung noch am größten. Deshalb kann dort durch Rückführen von Trocknungsluft diese Trocknungsluft vorteilhaft mehrfach mit Feuchtigkeit aufgesättigt werden.

Vorteilhaft ist ferner ein zweiter Heizer vorgesehen, mittels dessen die Zuluft vor deren Rückführen in die erste Sektion aufzuheizen ist. Die Zuluft ist aus der ersten Sektion abgeführt und dann erfindungsgemäß durch den Wärmeübertrager geführt worden. Diese Zuluft ist damit gesondert abgekühlt worden, so dass ein erneutes Aufheizen für eine erneute Aufsättigung der Zuluft mit Feuchtigkeit angemessen ist. Mit dem zweiten Heizer wird also die Zuluft nach deren Durchführen durch den Wärmeübertrager aufgeheizt. Der zweite Heizer verringert damit die relative Luftfeuchte dieser Zuluft. Weil das zu trocknende Gut in der ersten Sektion aber noch besonders feucht ist, besteht für das Absenken der relativen Luftfeuchte dieser Zuluft ein großer Spielraum. Es kann, muss aber nicht unbedingt stark nachgeheizt werden. Die Zuluft kann dennoch erneut weitgehend vollständig aufgesättigt werden. Am erfindungsgemäßen Wärmeübertrager und den genannten Heizern stehen damit breite Steuerungsbereiche zur Verfügung.

Ein Vorteil der erfindungsgemäßen Lösung liegt darin, dass der zweite Heizer zum Aufheizen der rückgeführten, insbesondere auskondensierten Zuluft klein gestaltet sein kann. Besonders vorteilhaft kann dieser zweite Heizer sogar ganz entfallen.

Um die oben genannten Steuerungsbereiche voll ausnutzen zu können, wird vorteilhaft eine Vorrichtung, insbesondere in Gestalt einer Klappe, verwendet, mittels der die Menge des ersten Teils Abluft im Verhältnis zum zweiten Teil Abluft zu steuern ist.

Vorteilhaft ist es ferner, eine Abführvorrichtung zum Abführen eines dritten Teils Abluft aus der ersten Sektion vorzusehen. Die dabei abgeführte Abluft, wird damit aus der ersten Sektion vollständig ausgeschieden und ist entsprechend durch weitere Zuluft zu ersetzen. Mit dem derartigen vollständigen Abführen von Luft aus der ersten Sektion entsteht in dieser Sektion insgesamt ein Unterdruck, wodurch ein Austrag an Staub aus der ersten Sektion in die Umgebung des Durchlauftrockners vermieden werden kann.

Die Abführvorrichtung zum Abführen eines dritten Teils Abluft aus der ersten Sektion ist vorzugsweise in Strömungsrichtung der Abluft hinter dem Wärmeübertrager angeordnet. Es wird also bevorzugt die insgesamt aus der ersten Sektion abzuführende Abluft erst hinter dem Wärmetauscher aus dem Luftstrom entnommen. Mit der derartigen Luftführung kann am Wärmetauscher dieser Abluft zuerst noch deren Abwärme entzogen werden, bis sie dann insgesamt abgeführt, insbesondere in die Umgebung des Durchlauftrockners abgeschieden wird.

Die Abluftrückführung ist vorzugsweise und die Frischluftzuführung ist erfindungsgemäß je mit einer Saugvorrichtung versehen, mittels denen die zu fördernde Luft zunächst durch das zu trocknende Gut hindurchgesaugt und dann rückgeführt bzw. abgeführt wird. Indem derart die Luft mittels Saugen und nicht mittels Blasen gefördert wird, kann innerhalb des Gutes und den genannten Sektionen ein Unterdruck erzeugt werden, der verhindert, dass aus diesen Bereichen Staub nach außen gelangt.

Vorteilhaft ist ferner in zumindest einer der Sektionen ein Abluft-Sensor vorgesehen, mittels dessen in der Abluft deren Feuchte zu ermitteln ist. Ein derartiger Luft-Sensor ermittelt insbesondere die relative Luftfeuchtigkeit und/oder die Temperatur der ihn an- oder umströmenden Luft. Vorteilhaft ist mittels des Abluft-Sensors so die relative Luftfeuchtigkeit der Abluft zu ermitteln. Wenn die relative Luftfeuchtigkeit der Abluft bekannt ist, kann mittels einer Steuerung definiert sein, ob diese Abluft zu entfeuchten ist oder ob diese Luft wieder direkt der jeweiligen Sektion bzw. dem jeweiligen Bereich zuzuführen ist.

Alternativ oder zusätzlich ist ferner ein Zuluft-Sensor vorgesehen, mittels dessen in der Zuluft deren Feuchte zu ermitteln ist. Der Zuluft-Sensor ermittelt die relative Luftfeuchtigkeit der anströmenden Zuluft. Vorteilhaft ist so zu ermitteln, mit welcher relativen Luftfeuchtigkeit die Zuluft in die jeweilige Sektion hineinströmt. Besonders vorteilhaft ist so auch zu ermitteln, ob und um wieviel Grad Celsius die Zuluft zusätzlich durch einen Heizer aufzuwärmen ist, um eine gewünschte relative Luftfeuchtigkeit in der Zuluft zu erreichen.

In bevorzugter Weise sind ferner zum Transportieren des Gutes durch den Durchlauftrockner zwei Bänder vorgesehen, die insbesondere der ersten Sektion sowie der zweiten Sektion zugeordnet sind. Ein derart zweigeteiltes Band in einem Durchlauftrockner ermöglicht es, dass jede der beiden Sektionen ein eigenes Band aufweist. So können die beiden Sektionen auch räumlich getrennt voneinander, insbesondere übereinander, angeordnet werden.

Ferner ist vorzugsweise auch eine Regeleinrichtung vorgesehen, mittels der die Feuchte in der Abluft zu messen und eine Luftführung in der Abluftrückführeinrichtung, im ersten Wärmeübertrager und/oder im zweiten Wärmeübertrager zu regeln ist. Eine Regeleinrichtung bzw. Steuerung wertet Eingänge der Regeleinrichtung aus und regelt bzw. steuert mittels einer Logik der Regeleinrichtung deren Ausgänge. Als Eingänge dienen hier elektrische Signale von Sensoren unterschiedlicher Art, wie beispielsweise einem Temperatursensor oder einem Feuchtesensor. Als Ausgänge dienen meist Schalter oder elektrische Signale, beispielsweise zum Steuern des Heizers. Mittels der Regeleinrichtung ist vorteilhaft die Luftführung, insbesondere mittels Ventilation, in der Abluftrückführeinrichtung an die jeweilig vorherrschende relative Luftfeuchte der Abluft anzupassen.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen stark vereinfachten Längsschnitt eines Durchlauftrockners gemäß dem Stand der Technik und
- Fig. 2: einen stark vereinfachten Längsschnitt eines erfindungsgemäßen Durchlauftrockners.

### Detaillierte Beschreibung des Ausführunqsbeispiels

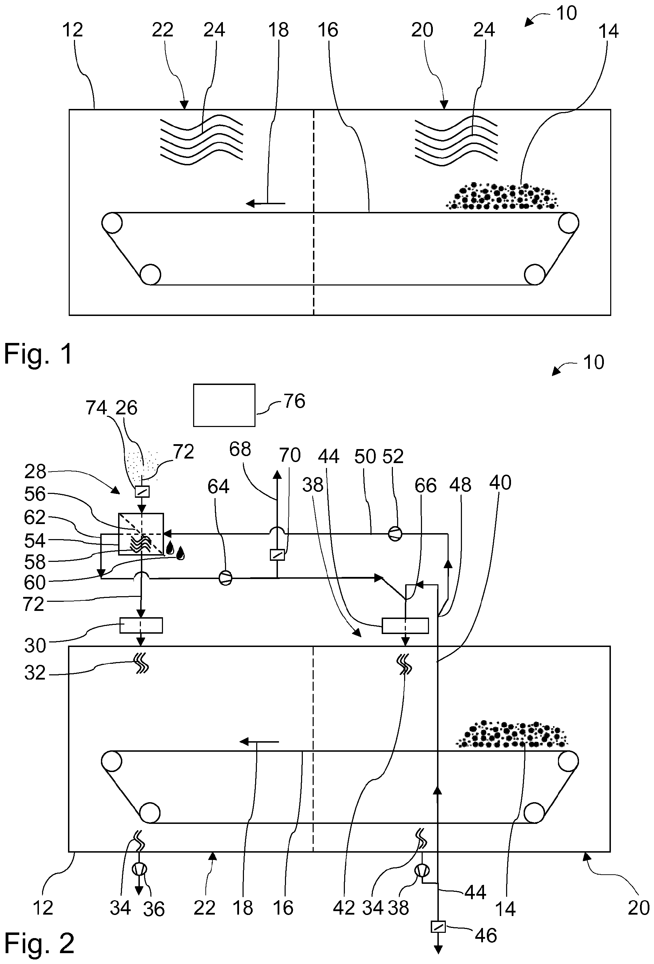

In den Fig. 1 und 2 ist je ein Durchlauftrockner 10 in Form eines Bandtrockners gezeigt. Der Durchlauftrockner 10 weist ein Gehäuse 12 auf, durch das zunächst feuchtes oder nasses Gut 14 mittels eines Bandes 16 in einer Transportrichtung 18 durch den Durchlauftrockner 10 hindurch zu transportieren ist.

Das Gut 14 durchläuft während des Transports zunächst eine erste Sektion 20 und danach eine zweite Sektion 22. Die beiden Sektionen 20 und 22 unterteilen das Gehäuse 12 räumlich. Sie sind in Transportrichtung gegebenenfalls mittels einer Trennwand oder mehreren Trennwänden luftströmungstechnisch weitgehend voneinander getrennt. Die Sektionen 20 und 22 können auch ihrerseits nochmals in Untersektionen unterteilt sein.

Innerhalb des Gehäuses 12 befindet sich Warmluft 24, die dem zu trocknenden Gut 14 (nicht dargestellte) Feuchtigkeit entzieht. Mit dem Entziehen von Feuchtigkeit aus dem Gut 14 wird das Gut 14 trockener, es wird getrocknet.

Fig. 2 veranschaulicht, wie bei dem dortigen, erfindungsgemäßen Durchlauftrockner 10 mittels Warmluft ein solches Gut 14 getrocknet wird. Zum Trocknen strömt Frischluft 26 von außerhalb in das Gehäuse 12, gefördert von einer Frischluftzuführeinrichtung 28. Die Frischluft 26 durchströmt einen ersten Heizer 30, der die Frischluft 26 auf ihrem Weg durch den Heizer 30 erwärmt. Mit dem Erwärmen der Frischluft 26 nimmt die relative Luftfeuchtigkeit der Frischluft 26 ab, die Frischluft 26 wird "trockener".

Diese Frischluft 26 wird nach dem Erwärmen als Zuluft 32 bezeichnet. Die Zuluft 32 strömt in die Sektion 22 und umströmt dort die einzelnen Partikel des Gutes 14 bzw. sie durchströmt die Schicht des Gutes 14 auf dem Band 16. Bei diesem Umströmen der Partikel des Gutes 14 nimmt die Zuluft 32 Feuchtigkeit aus dem Gut 14 auf. Die relative Luftfeuchtigkeit der Zuluft 32 steigt, die Zuluft 32 wird "feuchter". Die angefeuchtete Zuluft 32 wird nachfolgend aus der Sektion 22 als Abluft 34 mittels einer Abluftabführung 36 mit einem Ventilator aus dem Gehäuse 12 in dessen Umgebung abgeführt. Diese Abluft 34 stellt also Fortluft dar.

Bevor das Gut 14 in die zweite Sektion 22 gelangt, durchläuft es die erste Sektion 20. In der Sektion 20 wird unten Abluft 34 abgeführt. Diese Abluft 34 wird mittels einer Abluftrückführeinrichtung 38, die insbesondere einen Ventilator umfasst, zu einer Rückführleitung 40 geleitet. Durch die Rückführleitung 40 wird diese Abluft 34 wieder zum Großteil in die Sektion 20 als Zuluft 42 zurückgeführt.

An der Rückführleitung 40 kann eine Klappe 46 angeschlossen sein, durch die hindurch ein Teil der Abluft 34 direkt in die Umgebung des Durchlauftrockners 10 abgeführt werden kann.

Am Ausgang der Rückführleitung 40 ist ein Heizer 44 angeordnet, mittels dessen die rückgeführte Abluft 34 vor ihrem Wiedereintritt als Zuluft 42 in die Sektion 20 aufgewärmt werden kann. Der Heizer 44 kann, muss aber nicht zwingend vorgesehen sein. Alternativ kann der Heizer 44 auch eine vergleichsweise kleine Heizkapazität aufweisen. Die Abluft 34 aus der Sektion 20 wird also mittels der Abluftrückführeinrichtung 38 zum größten Teil direkt als Zuluft 42 in die Sektion 20 zurückgeführt.

Die Rückführleitung 40 weist ferner eine Abzweigung 48 auf, an der eine Leitung 50 angeschlossen ist. An der Abzweigung 48 wird ein Teil der Abluft 34 aus der Rückführleitung 40 abgezweigt und mittels der Leitung 50 abgeleitet. Dazu kann in der Leitung 50 ein getrennt zu regelnder, saugender Ventilator 52 angeordnet sein. Die Leitung 50 führt die abgezweigte Abluft zu einem Wärmeübertrager 54, durch diesen hindurch.

Der Wärmeübertrager 54 weist eine Trennfläche 56 auf, an der an einer Seite als wärmezuführende Luft die abgezweigte Abluft 34 aus der ersten Sektion 20 und an der anderen Seite als wärmeabführende Luft die Frischluft 26 entlanggeführt wird. An der Trennfläche 56 geht so Wärme von der Abluft 34 als Abwärme 58 auf die Frischluft 26 über. Zugleich kondensiert mit dem Abkühlen der Abluft 34 an der Trennfläche 56 Wasser 60 aus der Abluft 34 aus.

Eine Rückführleitung 62 leitet die derart abgekühlte und auskondensierte Luft als Zuluft 42 zurück in die erste Sektion 20. Dazu kann in der Rückführleitung 62 ein getrennt zu regelnder, saugender Ventilator 64 angeordnet sein. Die Rückführleitung 62 mündet an einer Einmündung 66 in Strömungsrichtung hinter der Abzweigung 48 in die Rückführleitung 40.

In Strömungsrichtung kurz hinter dem Ventilator 64 zweigt von der Rückführleitung 62 eine nach außen in die Umgebung des Durchlauftrockners 10 führende Leitung 68 mit einer darin angeordneten Klappe 70 ab. Diese Leitung 68 dient mit der zugeordneten Klappe 70 dazu, aus der Rückführleitung 62 abgekühlte Abluft 34 in die Umgebung abzuführen.

Mit dem derartigen Abführen eines Teils der Abluft 34 in die Umgebung des Durchlauftrockners 10 entsteht in der Sektion 20 ein leichter Unterdruck. Zum Ausgleich dieses Unterdrucks wird aus der Umgebung des Durchlauftrockners 10 von außen Luft in die erste Sektion 20 hineingedrückt. Zugleich kann aus der Sektion 20 keine Luft und damit auch kein Staub nach außen austreten. Dieses Zuführen von Luft von außen in die Sektion 20 hinein verhindert also ein Verstauben der Umgebung des Durchlauftrockners 10.

Die Frischluft 26 wird mittels einer Zuleitung 72 durch den Wärmeübertrager 54 hindurch und, wie oben erläutert, durch den Heizer 30 hindurch in die zweite Sektion 22 geleitet. Dabei wird die Menge an derart zugeführter Zuluft 32 mittels einer Klappe 74 gesteuert, die in der Zuleitung 72 vor dem Wärmeübertrager 54 angeordnet ist.

Die genannten Klappen und Ventilatoren werden insgesamt mittels einer Steuerung 76 gesteuert und insbesondere geregelt, wobei diverse, mit der Steuerung 76 gekoppelte (nicht dargestellte) Messeinrichtungen und Sensoren vorgesehen sein können.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Durchlauftrockner
- 12: Gehäuse
- 14: Gut
- 16: Band
- 18: Transportrichtung
- 20: erste Sektion
- 22: zweite Sektion
- 24: Warmluft
- 26: Frischluft
- 28: Frischluftzuführeinrichtung
- 30: Heizer
- 32: Zuluft
- 34: Abluft
- 36: Abluftabführung
- 38: Abluftrückführeinrichtung
- 40: Rückführleitung
- 42: Zuluft
- 44: Heizer
- 46: Klappe
- 48: Abzweigung
- 50: Leitung
- 52: Ventilator
- 54: Wärmeübertrager
- 56: Trennfläche
- 58: Abwärme
- 60: Wasser
- 62: Rückführleitung
- 64: Ventilator
- 66: Einmündung
- 68: Leitung
- 70: Klappe
- 72: Zuleitung
- 74: Klappe
- 76: Steuerung

## Patentansprüche

1. Durchlauftrockner (10) zum Trocknen eines Gutes (14) mittels Warmluft (24)
- mit einem Gehäuse (12),
- mit einer ersten und einer zweiten Sektion (20, 22), die vom Gut (14) in einer Transportrichtung (18) nacheinander durchlaufen werden, und das Gehäuse (12) räumlich unterteilen,
- mit einer Frischluftzuführeinrichtung (28) zum Zuführen von Frischluft (26) als Zuluft (32),
- mit einer Abluftrückführeinrichtung (38) zum Abführen von Abluft (34) und Rückführen als Zuluft (42) und
- mit einem Wärmeübertrager (54), durch den hindurch zum einen die Frischluft (26) und zum anderen die Abluft (34) geführt sind, zum Übertragen von Abwärme der Abluft (34) in die Frischluft (26),
wobei
- mit der Abluftrückführeinrichtung (38) ein erster Teil der Abluft (34) aus der ersten Sektion (20) abzuführen und als Zuluft (42) direkt in die erste Sektion (20) rückzuführen ist,
- mit der Abluftrückführeinrichtung (38) ein zweiter Teil der Abluft (34) aus der ersten Sektion (20) abzuführen, durch den Wärmeübertrager (54) zu führen und als Zuluft (42) in die erste Sektion (20) rückzuführen ist,
**dadurch gekennzeichnet, dass** mit der Frischluftzuführeinrichtung (28) die Frischluft (26) als Zuluft (32) durch den Wärmeübertrager (54) in die zweite Sektion (22) zuzuführen ist, die sich in Strömungsrichtung des Gutes hinter der ersten Sektion (20) befindet, derart, dass das Gut in der zweiten Sektion (22) mit zugeführter Frischluft (26) zu trocknen ist,
wobei die Frischluftzuführeinrichtung (28) mit einer ersten Saugvorrichtung (36) zum Absaugen von Abluft (34) aus der zweiten Sektion (22) versehen ist, mittels der die Frischluft (26) als Zuluft (32) als zu fördernde Luft zunächst durch das zu trocknende Gut hindurchgesaugt und dann nachfolgend aus der zweiten Sektion (22) als Abluft (34) aus dem Gehäuse (12) in dessen Umgebung abgeführt ist,
derart, dass mittels Saugen innerhalb des Gutes und der zweiten Sektion (22) ein Unterdruck erzeugt ist.

2. Durchlauftrockner nach Anspruch 1,
**dadurch gekennzeichnet, dass** der Wärmeübertrager (54) derart dimensioniert ist, dass an ihm Wasser aus der Abluft (34) auskondensiert.

3. Durchlauftrockner nach Anspruch 1 oder 2,
**dadurch gekennzeichnet, dass** ein erster Heizer (44) vorgesehen ist, mittels dessen die Zuluft (42) vor deren Rückführen in die erste Sektion (20) aufzuheizen ist.

4. Durchlauftrockner nach einem der Ansprüche 1 bis 3,
**dadurch gekennzeichnet, dass** ein zweiter Heizer (30) vorgesehen ist, mittels dessen die Zuluft (32) vor deren Einführen in die zweite Sektion (22) aufzuheizen ist.

5. Durchlauftrockner nach einem der Ansprüche 1 bis 4,
**dadurch gekennzeichnet, dass** eine Vorrichtung (38, 46, 52, 64, 70) zum Steuern der Menge des ersten Teils Abluft (34) im Verhältnis zum zweiten Teil Abluft (34) vorgesehen ist.

6. Durchlauftrockner nach einem der Ansprüche 1 bis 5,
**dadurch gekennzeichnet, dass** eine Abführvorrichtung (68, 70) zum Abführen eines dritten Teils Abluft (34) aus der ersten Sektion (20) vorgesehen ist.

7. Durchlauftrockner nach Anspruch 6,
**dadurch gekennzeichnet, dass** die Abführvorrichtung (68, 70) in Strömungsrichtung der Abluft (34) hinter dem Wärmeübertrager (54) angeordnet ist.

8. Durchlauftrockner nach einem der Ansprüche 1 bis 7,
**dadurch gekennzeichnet, dass** die Abluftrückführeinrichtung (38) mit einer zweiten Saugvorrichtung zum Absaugen von Abluft (34) aus der ersten Sektion (20) versehen ist.

9. Verfahren zum Betreiben eines Durchlauftrockners (10) nach einem der Ansprüche 1 bis 8, bei dem
- eine erste und eine zweite Sektion (20, 22) vom Gut (14) in einer Transportrichtung (18) nacheinander durchlaufen werden,
- Frischluft (26) als Zuluft (32) zugeführt wird,
- Abluft (34) abgeführt und als Zuluft (42) rückgeführt wird und
- mittels eines Wärmeübertragers (54) Abwärme (58) der Abluft (34) in die Frischluft (26) übertragen wird,
wobei
- ein erster Teil der Abluft (34) aus der ersten Sektion (20) abgeführt und als Zuluft (42) direkt in die erste Sektion (20) rückgeführt wird,
- ein zweiter Teil der Abluft (34) aus der ersten Sektion (20) abgeführt, durch den Wärmeübertrager (54) geführt und als Zuluft (42) in die erste Sektion (20) rückgeführt wird,
**dadurch gekennzeichnet, dass** die Frischluft (26) als Zuluft (32) durch den Wärmeübertrager (54) in die zweite Sektion (22) zugeführt wird, die sich in Strömungsrichtung des Gutes hinter der ersten Sektion (20) befindet, derart, dass das Gut in der zweiten Sektion (22) mit zugeführter Frischluft (26) getrocknet wird, wobei die Frischluft (26) als Zuluft (32) als zu fördernde Luft zunächst durch das zu trocknende Gut hindurchgesaugt und dann nachfolgend aus der zweiten Sektion (22) als Abluft (34) aus dem Gehäuse (12) in dessen Umgebung abgeführt wird, derart, dass mittels Saugen innerhalb des Gutes und der zweiten Sektion (22) ein Unterdruck erzeugt wird.

## Claims

1. Continuous flow drier (10) for drying a material (14) by means of hot air (24),
- having a housing (12),
- having a first and a second section (20, 22) through which the material (14) passes in succession in a transport direction (18) and which spatially divide the housing (12),
- having a fresh air supply device (28) for supplying fresh air (26) as supply air (32),
- having an exhaust air recirculation device (38) for removing exhaust air (34) and recirculating it as supply air (42), and
- having a heat exchanger (54), through which on the one hand the fresh air (26) and on the other hand the exhaust air (34) are guided, for transferring waste heat of the exhaust air (34) into the fresh air (26),
wherein
- by means of the exhaust air recirculation device (38), a first portion of the exhaust air (34) is to be removed from the first section (20) and recirculated directly into the first section (20) as supply air (42),
- by means of the exhaust air recirculation device (38), a second portion of the exhaust air (34) is to be removed from the first section (20), guided through the heat exchanger (54) and recirculated into the first section (20) as supply air (42),
**characterised in that**, by means of the fresh air supply device (28), the fresh air (26) as supply air (32) is to be supplied through the heat exchanger (54) into the second section (22), which is located after the first section (20) in the direction of flow of the material, in such a manner that the material is to be dried in the second section (22) with supplied fresh air (26),
wherein the fresh air supply device (28) is provided with a first suction device (36) for extracting exhaust air (34) from the second section (22) by suction, by means of which the fresh air (26) as supply air (32) as air to be conveyed is first drawn by suction through the material to be dried and then subsequently is removed from the second section (22) as exhaust air (34) from the housing (12) into the surroundings thereof,
in such a manner that a low pressure is generated within the material and the second section (22) by means of suction.

2. Continuous flow drier according to claim 1,
**characterised in that** the heat exchanger (54) is so dimensioned that water from the exhaust air (34) condenses thereon.

3. Continuous flow drier according to claim 1 or 2,
**characterised in that** a first heater (44) is provided, by means of which the supply air (42) is to be heated before it is recirculated into the first section (20).

4. Continuous flow drier according to any one of claims 1 to 3,
**characterised in that** a second heater (30) is provided, by means of which the supply air (32) is to be heated before it is introduced into the second section (22).

5. Continuous flow drier according to any one of claims 1 to 4,
**characterised in that** a device (38, 46, 52, 64, 70) for controlling the amount of the first portion of exhaust air (34) in relation to the second portion of exhaust air (34) is provided.

6. Continuous flow drier according to any one of claims 1 to 5,
**characterised in that** a removal device (68, 70) for removing a third portion of exhaust air (34) from the first section (20) is provided.

7. Continuous flow drier according to claim 6,
**characterised in that** the removal device (68, 70) is arranged after the heat exchanger (54) in the direction of flow of the exhaust air (34).

8. Continuous flow drier according to any one of claims 1 to 7,
**characterised in that** the exhaust air recirculation device (38) is provided with a second suction device for extracting exhaust air (34) from the first section (20) by suction.

9. Method for operating a continuous flow drier (10) according to any one of claims 1 to 8, in which
- the material (14) passes through a first and a second section (20, 22) in succession in a transport direction (18),
- fresh air (26) is supplied as supply air (32),
- exhaust air (34) is removed and recirculated as supply air (42), and
- by means of a heat exchanger (54), waste heat (58) of the exhaust air (34) is transferred into the fresh air (26),
wherein
- a first portion of the exhaust air (34) is removed from the first section (20) and recirculated directly into the first section (20) as supply air (42),
- a second portion of the exhaust air (34) is removed from the first section (20), guided through the heat exchanger (54) and recirculated into the first section (20) as supply air (42),
**characterised in that** the fresh air (26) as supply air (32) is supplied through the heat exchanger (54) into the second section (22), which is located after the first section (20) in the direction of flow of the material, in such a manner that the material is dried in the second section (22) with supplied fresh air (26), wherein the fresh air (26) as supply air (32) as air to be conveyed is first drawn by suction through the material to be dried and then subsequently removed from the second section (22) as exhaust air (34) from the housing (12) into the surroundings thereof, in such a manner that a low pressure is generated within the material and the second section (22) by means of suction.

## Revendications

1. Séchoir continu (10) pour le séchage d'un produit (14) à l'aide d'air chaud (24) :
- avec un carter (12) ;
- avec une première et une deuxième section (20, 22) traversées l'une après l'autre par le produit (14) dans une direction de transport (18) et divisant le carter dans l'espace ;
- avec un dispositif d'alimentation en air frais (28) pour l'alimentation en air frais (26) prenant la forme d'air neuf (32) ;
- avec un dispositif de reflux d'air vicié (38) pour l'évacuation de l'air vicié (34) et la réintroduction sous la forme d'air neuf (42) ; et
- avec un caloporteur (54) à travers lequel d'une part l'air frais (26) et d'autre part l'air vicié (34) sont conduits pour transmettre la chaleur d'échappement de l'air vicié (34) à l'air frais (26) ;
sachant que :
- une première partie de l'air vicié (34) est évacuée hors de la première section (20) à l'aide du dispositif de reflux d'air vicié (38) et réintroduite directement sous la forme d'air neuf (42) dans la première section (20) ;
- une deuxième partie de l'air vicié (34) est évacuée hors de la première section (20) à l'aide du dispositif de reflux d'air vicié (38) puis introduite à travers le caloporteur (54) et réintroduite sous la forme d'air neuf (42) dans la première section (20) ;
**caractérisé en ce que** l'air frais (26) est amené sous la forme d'air neuf (32) à travers le caloporteur (54) dans la deuxième section (22) à l'aide du dispositif d'alimentation en air frais (28), ladite section se trouvant derrière la première section (20) dans la direction d'écoulement du produit, de telle sorte que le produit soit séché dans la deuxième section (22) grâce à l'air frais (26) amené ;
le dispositif d'alimentation en air frais (28) étant pourvu d'un premier dispositif d'aspiration (36) pour aspirer l'air vicié (34) hors de la deuxième section (22) et ce dispositif d'aspiration aspirant l'air frais (26) sous la forme d'air neuf (32) à travers le produit à sécher en évacuant d'abord l'air extrait à sécher, sous la forme d'air à transporter, et en l'évacuant ensuite hors de la deuxième section (22) sous la forme d'air vicié (34) en le faisant passer du carter (12) jusque dans l'environnement alentour ;
de telle sorte qu'une sous-pression soit engendrée par l'aspiration réalisée à l'intérieur du produit et de la deuxième section (22).

2. Séchoir continu selon la revendication 1, **caractérisé en ce que** le caloporteur (54) est dimensionné de telle sorte que de l'eau provenant de l'air vicié (34) se condense à son contact.

3. Séchoir continu selon la revendication 1 ou 2, **caractérisé en ce qu'**un premier chauffage (44) est prévu à l'aide duquel l'air neuf (42) est chauffé avant sa réintroduction dans la première section (20).

4. Séchoir continu selon l'une quelconque des revendications 1 à 3, **caractérisé en ce qu'**un deuxième chauffage (30) est prévu à l'aide duquel l'air neuf (32) est chauffé avant sa réintroduction dans la deuxième section (22).

5. Séchoir continu selon l'une quelconque des revendications 1 à 4, **caractérisé en ce qu'**un dispositif (38, 46, 52, 64, 70) de commande de la quantité de première partie d'air vicié (34) par rapport à la deuxième partie d'air vicié (34) est prévu.

6. Séchoir continu selon l'une quelconque des revendications 1 à 5, **caractérisé en ce qu'**un dispositif d'évacuation (68, 70) est prévu pour l'évacuation d'une troisième partie de l'air vicié (34) provenant de la première section (20).

7. Séchoir continu selon la revendication 6, **caractérisé en ce que** le dispositif d'évacuation (68, 70) est disposé derrière le caloporteur (54) dans la direction d'écoulement de l'air vicié (34).

8. Séchoir continu selon l'une quelconque des revendications 1 à 7, **caractérisé en ce que** le dispositif de reflux d'air vicié (38) est pourvu d'un deuxième dispositif d'aspiration pour l'évacuation de l'air vicié (34) hors de la première section (20).

9. Procédé d'utilisation d'un séchoir continu (10) selon l'une quelconque des revendications 1 à 8, dans lequel :
- une première et une deuxième section (20, 22) sont traversées l'une après l'autre par un produit (14) dans une direction de transport (18) ;
- de l'air frais (26) est amené sous la forme d'air neuf (32) ;
- l'air vicié (34) est évacué et réintroduit sous la forme d'air neuf (42) ; et
- la chaleur d'échappement (58) de l'air vicié (34) est transmise à l'air frais (26) à l'aide d'un caloporteur (54) ;
sachant que :
- une première partie de l'air vicié (34) est évacuée hors de la première section (20) et réintroduite directement sous la forme d'air neuf (42) dans la première section (20) ;
- une deuxième partie de l'air vicié (34) est évacuée hors de la première section (20) puis introduite à travers le caloporteur (54) et réintroduite sous la forme d'air neuf (42) dans la première section (20) ;
**caractérisé en ce que** l'air frais (26) est amené sous la forme d'air neuf (32) à travers le caloporteur (54) dans la deuxième section (22), ladite section se trouvant derrière la première section (20) dans la direction d'écoulement du produit, de telle sorte que le produit soit séché dans la deuxième section (22) grâce à l'air frais (26) amené ;
l'air frais (26) sous la forme d'air neuf (32) étant d'abord aspiré à travers le produit à sécher, sous la forme d'air à transporter puis étant évacué hors de la deuxième section (22) sous la forme d'air vicié (34) en le faisant passer du carter (12) jusque dans l'environnement alentour, de telle sorte qu'une sous-pression soit engendrée par l'aspiration à l'intérieur du produit et de la deuxième section (22).
